# NEUE EUROPÄISCHE PATENTSCHRIFT

(11) **EP 2 099 722 B2**
(45) Veröffentlichungstag und Bekanntmachung des Hinweises auf die Entscheidung über den Einspruch: **02.09.2015**
(45) Hinweis auf die Patenterteilung: 09.03.2011
(21) Anmeldenummer: 07857482.9
(22) Anmeldetag: 12.12.2007
(51) Int. Cl.: C04B 24/26, C04B 24/42, C04B 28/02

(54) **HYDROPHOBE VERLEGUNG VON FLIESEN**
HYDROPHOBIC LAYING OF TILES
POSE HYDROFUGE DE CARRELAGE

(30) Priorität: 20.12.2006 DE 102006060356
(43) Veröffentlichungstag der Anmeldung: 16.09.2009
(73) Patentinhaber: Wacker Chemie AG, 81737 München (DE)
(72) Erfinder: BASTELBERGER, Thomas, 84547 Emmerting (DE); JODLBAUER, Franz, 84533 Marktl (DE)
(74) Vertreter: Budczinski, Angelika
(86) Internationale Anmeldenummer: PCT/EP2007/063819
(87) Internationale Veröffentlichungsnummer: WO 2008/074711

(56) Entgegenhaltungen:
- EP-A1- 1 394 198
- EP-A2- 1 193 287
- WO-A-2005/118684
- WO-A-2006/061139
- WO-A1-95/20626
- WO-A1-95/20627
- WO-A1-2004/013187
- WO-A1-2004/103928
- WO-A1-2007/048707
- DE-A1- 10 106 872
- DE-A1-102004 057 996
- NIEMER E.U.: 'Praxis.Handbuch Fliesen', Bd. 2, 1996, RUDOLF MÜLLER, KÖLN Seiten 90 - 98

## Beschreibung

Die Erfindung betrifft einen hydrophoben Fliesenverbund sowie Verfahren zu dessen Herstellung durch Verlegung von Fliesen unter Verwendung von zementären Mörteln, welche mit hydrophoben Polymerzusammensetzungen modifiziert sind.

Bei der Verlegung von Fliesen, wie beispielsweise Porzellan-, Keramik-, Steinzeug- und Glasfliesen, wird im allgemeinen ein polymermodifiziertes Einkomponentensystem in Form eines Trockenmörtels eingesetzt. Diese Trockenmörtel enthalten im allgemeinen Zement, Füllstoffe wie Sand, Verdickungsmittel, in Wasser redispergierbare Polymerpulver (Dispersionspulver) und gegebenenfalls weitere Additive. Der Trockenmörtel wird mit der benötigten Wassermenge angerührt und mit einer Zahnkelle in einer dünnen Schicht auf den Untergrund aufgetragen. Die Fliesen werden auf der so vorbereiteten Fliesenkleberschicht abgelegt und nach Aushärten der Fliesenkleberschicht werden die Fugen zwischen den Fliesen mit Fugenmörtel verfugt.

So beschreibt die WO-A 2005/118684 Trockenmörtel enthaltend Zement, Füllstoffe und hydrophobe Polymerzusammensetzungen sowie deren Verwendung für Skim Coats, d.h. für sehr dünne Oberputze oder Glättspachtelauftragungen, und für Monocouche, d.h. für einlagige Putze, die zugleich Dekorputze sind, sowie für Fugenfüller.

Der Einsatz von Dispersionspulvern in den Mörtelmassen dient insbesondere zur Verbesserung der Haftung. Die Haftzugfestigkeit wird mit der Norm EN 1348 geprüft, welche definierte Mindestwerte nach Normklimalagerung und Wasserlagerung fordert. Nicht berücksichtigt wird dabei, dass in der Praxis, je nach Witterungsbedingungen, eine ständige Wechselbeanspruchung stattfindet. Im Falle von nicht überdachten Terrassen kann Niederschlag beispielsweise am Rand der gefliesten Fläche in den Fliesenverbund eindringen und die Fliesenkleberschicht sowie den Untergrund durchfeuchten. Dann dauert es sehr lange, bis eine vollständige Trocknung der Fliesenkleberschicht und des Untergrundes erfolgt, da das Wasser nur durch die im Vergleich zu den Fliesen sehr schmalen Fugen wieder aus dem Fliesenverbund entweichen kann.

In den letzten Jahren hat sich für den Außenbereich ein Verfahren etabliert, bei dem die Fliesen auf dichten Entkopplungsmatten bzw. Drainagematten aus Polyethylen verklebt werden. In extremen Fällen findet dabei eine Austrocknung überhaupt nicht mehr statt. Terrassen und Balkone sind in der Regel auch mit einem leichten Gefälle ausgestattet, damit das Niederschlagswasser nicht auf den Fliesen stehen bleibt und Pfützen bildet. Das Gefälle bewirkt allerdings auch, dass in die Fliesenkleberschicht und den Untergrund eingedrungenes Niederschlagswasser verbreitet wird und Wasserschäden somit großflächig auftreten.

Das in die Fliesenkleberschicht eingedrungene Niederschlagswasser vermag einzelne Komponenten der Fliesenkleberzusammensetzung, wie beispielsweise Calciumhydroxid oder Calciumsulfat zu lösen, so dass in der Fliesenkleberschicht ein salzhaltiges, alkalisches und damit korrosives Milieu herrscht, das zu einer Schädigung des Fliesenverbundes führen kann. Zudem führt ein Austreten der wässrigen Lösungen aus der Fliesenkleberschicht auf die Fugen- bzw.
Fliesenoberfläche nach Verdunstung des Wassers zu Ausblühungen, die oft nur sehr schwer entfernbar sind.

Bei der Fliesenverklebung wird, wie die einschlägigen Normen zeigen (z.B. EN 12004), davon ausgegangen, dass diese wasserfest ist und auch eine dauerhafte Durchfeuchtung, selbst bei Frost-Tau-Beanspruchung nicht schadet. Hinsichtlich Schädigungen durch häufige Temperatur- oder Feucht-Trockenwechsel gibt es in den europäischen bzw. deutschen Fliesenklebernormen keine Vorgaben. Die Praxis zeigt jedoch, dass es gerade bei nicht überdachten Balkonen und Terrassen immer wieder zu Schäden kommt. Die Schäden werden teilweise auf Frostsprengung zurückgeführt. Zu Schädigung durch Salzsprengung findet man im Zusammenhang mit Fliesenverklebung in der Literatur kaum Hinweise. Salzsprengung kommt in der Praxis allerdings häufig vor und stellt eine Form der Verwitterung dar. Bedingt durch ständige Veränderung des Feuchtigkeitsgehaltes und der Temperatur können sich aus Salzlösungen Kristalle bilden bzw. Kristallveränderungen stattfinden, die einen Baustoff im Laufe der Zeit zermürben. Schädliche Salze können in Baustoffen bereits enthalten sein oder von außen durch gasförmiges oder hydratisiertes SO₂ oder CO₂ eingetragen werden.

Es bestand daher die Aufgabe, einen Fliesenverbund umfassend Untergrund, Fliesenkleberschicht, Fliese und Fugenmörtel bereit zu stellen, der auch unter feuchten oder nassen Bedingungen kaum Feuchtigkeit aufnimmt.

Gegenstand der Erfindung ist ein Fliesenverbund erhältlich mittels Verklebung und Verfugung von Fliesen mit zementären Mörteln enthaltend 15 bis 70 Gew.-% Zement, 30 bis 85 Gew.-% Füllstoff und 0,1 bis 15 Gew.-% einer hydrophoben Polymerzusammensetzung, jeweils bezogen auf das Gesamtgewicht der Rezeptur zur Verklebung oder Verfugung,
dadurch gekennzeichnet, dass
die Fliesen auf horizontalen Flächen oder Flächen mit geringem Gefälle verlegt sind und
die hydrophobe Polymerzusammensetzung a) mindestens ein Organopolymer auf Basis von einem oder mehreren ethylenisch ungesättigten Monomeren aus der Gruppe umfassend Vinylester von unverzweigten oder verzweigten Alkylcarbonsäuren mit 1 bis 20 C-Atomen, Acrylsäureester oder Methacrylsäureester von verzweigten oder unverzweigten Alkoholen oder Diolen mit 1 bis 20 C-Atomen, Fumar- und/oder Maleinsäuremono- oder -diester von unverzweigten oder verzweigten Alkoholen mit 1 bis 12 C-Atomen, Olefine, Diene, Vinylaromaten und Vinylhalogenide und
ein oder mehrere b) Organosiliziumverbindungen und/oder c) Fettsäureverbindungen und/oder Fettsäurederivate enthält, wobei der Anteil der Organosiliziumverbindungen b) oder der Anteil der Fettsäuren oder Fettsäurederivate c) sowie der Anteil der gegebenenfalls enthaltenen Gemische aus b) und c) jeweils 0,1 bis 30 Gew.-% beträgt, wobei sich die Angaben in Gew.-% jeweils auf das Gesamtgewicht von Organopolymer a) beziehen,
wobei der ausgehärtete Fliesenklebermörtel und der ausgehärtete Fugenfüllermörtel Wasseraufnahmekoeffizienten w von jeweils ≤ 0,3 kg/m²h^{0,5} und diffusionsäquivalente Luftschichtdicken S_{d} von jeweils ≤ 0,5 m aufweisen und das Produkt aus w x S_{d} für den ausgehärteten Fliesenklebermörtel und den ausgehärteten Fugenfüllermörtel jeweils ≤ 0,1 kg/mh^{0,5} ist.

Der Wasseraufnahmekoeffizient w beschreibt die von der Verklebung bzw. der Verfugung pro Flächeneinheit aufgenommene Wassermenge in Abhängigkeit von der Zeit.

Die diffusionsäquivalente Luftschichtdicke S_{d} errechnet sich aus S_{d} = µ x d, wobei µ = Wasserdampfdiffusionswiderstandszahl, bestimmt gemäß DIN EN ISO 12572, und d = Schichtdicke der Verfugung oder Verklebung.

Die Bestimmung von w und S_{d} erfolgt gemäß DIN 52617 (abgelöst durch EN ISO 12572 und EN ISO 15148) an einer 4 mm dicken, ausgehärteten Mörtelschicht, die vollflächig auf Porenbeton aufgetragen ist. Nach der Herstellung der Mörtelproben werden diese für 14 Tage bei Normklima (DIN 50014: 23°C, 50 % relative Luftfeuchte) gelagert.

Der Wasseraufnahmekoeffizient w und die diffusionsäquivalente Luftschichtdicke S_{d} wurden bisher nur bei der Verputzung von Außenfassaden gemäß DIN 18550 in Betracht gezogen. Bei der Verlegung von Fliesen wurden diese Parameter bisher nicht in Erwägung gezogen. Denn im Vergleich zu senkrechten Flächen, wie Außenfassaden, ist insbesondere auf horizontalen Flächen im Außenbereich die Niederschlagsmenge pro Quadratmeter bei sonst gleichen Bedingungen viel höher, und zudem fließt das Wasser von horizontalen Flächen auch viel langsamer oder überhaupt nicht ab. Beide Effekte führen zu einem deutlich höheren Staudruck des Wassers auf beispielsweise horizontalen, verfliesten Flächen.

Vorzugsweise beträgt w ≤ 0,2 kg/m²h^{0,5} und vorzugsweise beträgt S_{d} ≤ 0,15 m. Das Produkt w x S_{d} beträgt vorzugsweise ≤ 0,05 kg/mh^{0,5}, besonders bevorzugt ≤ 0,015 kg/mh^{0,5}.

Die erfindungsgemäßen Werte für die Wasseraufnahmekoeffizienten w, die diffusionsäquivalenten Luftschichtdicken S_{d} und die Produkte w x S_{d} werden durch den Einsatz hydrophober Polymerzusammensetzungen bewirkt.

Geeignet sind hydrophobe Polymerzusammensetzungen enthaltend
a) mindestens ein Organopolymer auf Basis von einem oder mehreren ethylenisch ungesättigten Monomeren aus der Gruppe umfassend Vinylester von unverzweigten oder verzweigten Alkylcarbonsäuren mit 1 bis 20 C-Atomen, Acrylsäureester oder Methacrylsäureester von verzweigten oder unverzweigten Alkoholen oder Diolen mit 1 bis 20 C-Atomen, Fumar- und/oder Maleinsäuremono- oder -diester von unverzweigten oder verzweigten Alkoholen mit 1 bis 12 C-Atomen, Olefine, Diene, Vinylaromaten und Vinylhalogenide, und
b) ein oder mehrere Organosiliziumverbindungen, oder
c) eine oder mehrere Fettsäuren und/oder Fettsäurederivate, oder eine Kombination der Komponenten b) und c).

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit bis zu 13 C-Atomen, beispielsweise VeoVa9^{R} oder VeoVa10^{R} (Handelsname der Firma Shell). Besonders bevorzugt ist Vinylacetat.

Bevorzugte Estergruppen der Fumar- und Maleinsäure sind Methyl-, Ethyl-, n-Propyl-, iso-Propyl-, n-Butyl-, iso-Butyl-, t-Butyl-, Hexyl-, Ethylhexyl-, und Dodecyl-Gruppe.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Bevorzugte Beispiele für Olefine und oder Diene sind Ethylen, Propylen, Isopren und 1,3-Butadien. Bevorzugte Vinylaromaten sind Styrol, Methylstyrol und Vinyltoluol. Bevorzugtes Vinylhalogenid ist Vinylchlorid.

Bevorzugt werden ein oder mehrere Organopolymere a) ausgewählt aus der Gruppe umfassend Vinylester-Homopolymerisate, Vinylester-Mischpolymerisate enthaltend eine oder mehrere Monomereinheiten aus der Gruppe der Vinylester, Olefine, Vinylaromaten, Vinylhalogenide, Acrylsäureester, Methacrylsäureester, Fumar- und/oder Maleinsäuremono- oder -diester; (Meth)acrylsäureester-Homopolymerisate, (Meth)acrylsäureester-Mischpolymerisate enthaltend eine oder mehrere Monomereinheiten aus der Gruppe der Methacrylsäureester, Acrylsäureester, Olefine, Vinylaromaten, Vinylhalogenide, Fumar- und/oder Maleinsäuremono- oder -diester; Homo- oder Mischpolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert sein können; Homo- oder Mischpolymerisate von Vinylaromaten wie Styrol, Methylstyrol, Vinyltoluol; Homo- oder Mischpolymerisate von Vinylhalogenverbindungen wie Vinylchlorid.

Beispiele für bevorzugte Comonomere für Vinylester-Mischpolymerisate sind Vinylester wie Vinylacetat, und/ oder Vinyllaurat und/oder Vinylester von α-verzweigten Monocarbonsäuren mit bis zu 13 C-Atomen, α-Olefine wie Ethylen oder Propylen und/oder Vinylhalogenide wie Vinylchlorid und/oder Acrylsäureester bzw. Methacrylsäureester von Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder Fumar- und/oder Maleinsäuremono- oder -diester wie die Dimethyl-, Methyl-t-butyl-, Di-n-butyl-, Di-t-Butyl- und Diethylester der Maleinsäure bzw. Fumarsäure.

Beispiele für bevorzugte Comonomere für (Meth)acrylsäureester-Mischpolymerisate sind Vinylester wie Vinylacetat, α-Olefine wie Ethylen oder Propylen und/oder Vinylaromaten wie Styrol.

Beispiele für bevorzugte Comonomere für Vinylchlorid-Mischpolymerisate sind α-Olefine wie Ethylen oder Propylen und/oder Vinylester wie Vinylacetat und/oder Acrylsäureester bzw. Methacrylsäureester von Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder Fumar- und/oder Maleinsäuremono- oder -diester wie die Dimethyl-, Methyl-t-butyl-, Di-n-butyl-, Di-t-Butyl- und Diethylester der Maleinsäure bzw. Fumarsäure.

Besonders bevorzugte Mischpolymerisate sind Vinylacetet-Ethylen-Mischpolymerisate mit 5 bis 50 Gew.-% Ethyleneinheiten; Vinylacetat-Mischpolymerisate enthaltend 50 bis 90 Gew.-% Vinylacetateinheiten, 5 bis 50 Gew.-% Vinylestereinheiten von Vinylestern von alpha-verzweigten Monocarbonsäuren mit 9 bis 13 C-Atomen, 0 bis 30 Gew.-% Methacrylsäureestereinheiten von Alkoholen mit 1 bis 15 C-Atomen, 0 bis 40 Gew.-% Vinylestereinheiten von langkettigen Monocarbonsäuren mit 10 bis 20 C-Atomen und 0 bis 20 Gew.-% Ethyleneinheiten, wobei sich die Angaben in Gew.-% auf das Gesamtgewicht des Mischpolymerisats beziehen und sich jeweils auf 100 Gew.-% addieren.

Besonders bevorzugte Mischpolymerisate sind auch Vinylchlorid-Ethylen-Mischpolymerisate enthaltend 60 bis 99 Gew.-% Vinylchlorideinheiten und 1 bis 40 Gew.-% Ethyleneinheiten, wobei sich die Angaben in Gew.-% auf das Gesamtgewicht des Copolymerisats beziehen und sich jeweils auf 100 Gew.-% addieren. Solche Vinylchlorid-Ethylen-Copolymerisate sind aus EP 0 149 098 A2 bekannt.

Bevorzugte Organosiliziumverbindungen b) sind Kieselsäureester Si(OR')₄, Silane wie Tetraorganosilane SiR₄ und Organoorganoxysilane SiRₙ(OR')₄₋ₙ mit n = 1 bis 3, Polysilane mit vorzugsweise der allgemeinen Formel R₃Si (SiR₂)ₙSiR₃ mit n = 0 bis 500, Organosilandle SiRₙ(OH)₄₋ₙ, Disiloxane, Oligosiloxane, Polysiloxane aus Einheiten der allgemeinen Formel R_{c}H_{d}Si(OR')ₑ(OH)_{f}O_{(4-c-d-e-f)/2} mit c = 0 bis 3, d = 0 bis 1, e = 0 bis 3, f = 0 bis 3 und wobei die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Ethyl bedeutet, wobei die Reste R und R' auch mit Halogenen wie Chlor, mit Ether-, Thioether-, Ester-, Amid-, Nitril-, Hydroxyl-, Amin-, Carboxyl-, Sulfonsäure-, Carbonsäureanhydrid und Carbonyl-Gruppen substituiert sein können, und wobei im Fall der Polysilane R auch die Bedeutung OR' haben kann.

Bevorzugte Organosiliziumverbindungen b) sind auch Carbosilane, Polycarbosilane, Carbosiloxane, Polycarbosiloxane oder Polysilylendisiloxane sowie auch Cyclosiloxane.

Besonders bevorzugte Organosiliziumverbindungen b) sind Tetramethoxysilan, Tetraethoxysilan, Methyltripropoxysilan, Methyltri(ethoxyethoxy)silan, Vinyltri(methoxyethoxy)silan, (Meth)acryloxypropyltrimethoxysilan, (Meth)acryloxypropyltriethoxysilan, γ-Chlorpropyltriethoxysilan, β-Nitrilethyltriethoxysilan, γ-Mercaptopropyltrimethoxysilan, γ-Mercaptopropyltriethoxysilan, Phenyltriethoxysilan, Isooctyltriethoxysilan, n-Octyltriethoxysilan, Hexadecyltriethoxysilan, Di-propyldiethoxysilan, Methylphenyldiethoxysilan, Diphenyldimethoxysilan, Methylvinyltri-(ethoxyethoxy)silan, Tetramethyldiethoxydisilan, Trimethyltrimethoxydisilan, Trimethyltriethoxydisilan, Dimethyltetramethoxydisilan, Dimethyltetraethoxydisilan, mit Trimethylsiloxygruppen endblockierte Methylhydrogenpolysiloxane, mit Trimethylsiloxygruppen endblockierte Mischpolymere aus Dimethylsiloxan und Methylhydrogensiloxan-Einheiten, Dimethylpolysiloxane, sowie Dimethylpolysiloxane mit Si-OH-Gruppen in den endständigen Einheiten.

Bevorzugte Fettsäuren oder Fettsäurederivate c) werden ausgewählt aus der Gruppe der gesättigten und ungesättigten Fettsäuren mit 8 bis 22 C-Atomen, deren Metallseifen, deren Amide sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden und mit Polyhydroxyverbindungen.

Besonders bevorzugte Fettsäuren sind Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure).

Besonders bevorzugte Metallseifen sind die der bevorzugten C₈- bis C₂₂-Fettsäuren mit Metallen der 1. bis 3. Hauptgruppe bzw. 2. Nebengruppe des PSE, sowie mit Ammoniumverbindungen NX₄⁺, wobei X gleich oder verschieden ist und für H, C₁- bis C₈-Alkylrest und C₁- bis C₈-Hydroxyalkylrest steht. Am meisten bevorzugtwerden Metallseifen mit Lithium, Natrium, Kalium, Magnesium, Calcium, Aluminium, Zink, und den Ammoniumverbindungen.

Besonders bevorzugte Fettsäureamide sind die mit Mono- oder Diethanolamin und den obengenannten C₈- bis C₂₂-Fettsäuren erhältlichen Fettsäureamide.

Besonders bevorzugte Fettsäureester sind die C₁- bis C₁₄-Alkylester und - Alkylarylester der genannten C₈- bis C₂₂-Fettsäuren, vorzugsweise Methyl-, Ethyl-, Propyl-, Butyl-, Ethylhexyl-Ester sowie der Benzylester. Besonders bevorzugte Fettsäureester sind auch die Mono-, Di- und Polyglykolester der C₈- bis C₂₂-Fettsäuren. Weitere besonders bevorzugte Fettsäureester sind die Mono- und Diester von Polyglykolen und/oder Polyalkylenglykolen mit bis zu 20 Oxyalkylen-Einheiten, wie Polyethylenglykol und Polypropylenglykol. Besonders bevorzugt sind auch die Mono-, Di- und Tri-Fettsäureester des Glycerins mit den genannten C₈- bis C₂₂-Fettsäuren, sowie die Mono-, Di- und Tri-Fettsäureester von Mono-, Di- und Triethanolamin mit den genannten C₈- bis C₂₂-Fettsäuren. Besonders bevorzugt sind auch die Fettsäureester von Sorbit und Mannit. Besonders bevorzugt sind die C₁- bis C₁₄-Alkylester und Alkylarylester der Laurinsäure und der Ölsäure, Mono- und Diglykolester der Laurinsäure und der Ölsäure, sowie die Mono-, Di- und Tri-Fettsäureester des Glycerins mit der Laurinsäure und der Ölsäure.

Der Anteil der Organosiliziumverbindungen b) oder der Anteil der Fettsäuren oder Fettsäurederivate c) sowie der Anteil von Gemischen aus b) und c) beträgt jeweils bevorzugt 1 bis 20 Gew.-% und besonders bevorzugt 1 bis 10 Gew.-%, wobei sich die Angaben in Gew.-% jeweils auf das Gesamtgewicht von Organopolymer a) beziehen.

Die hydrophoben Polymerzusammensetzungen werden als wässrige Dispersionen oder in Form deren Wasser redispergierbaren Dispersuionspulver eingesetzt. Die WO 2006/061139 A1, WO 95/20627 A1, EP 1394198 A1 und die WO 97/18175 A1 beschreiben exemplarisch hydrophobe Polymerzusammensetzungen sowie deren Herstellung als Dispersion oder Dispersionspulver und sind Bestandteil der vorliegenden Anmeldung.

Ein weiteres Beispiel für eine geeignete hydrophobe Polymerzusammensetzung ist in WO 02/31036 A1 beschrieben, die mindestens ein Organopolymer a) und 0,1 bis 30 Gew.-%, bezogen auf die Gesamtmasse des Organopolymers a), mindestens eines Carbonsäureesters enthält, dessen Alkoholkomponente aus der Gruppe der Polyhydroxyverbindungen stammt und der zwischen Carbonsäure und Alkoholkomponente zwischen 0 und 80 Polyethylenoxideinheiten aufweist.

Typische Rezepturen für zementäre Fliesenkleber enthalten 15 bis 70 Gew.-% Zement, insbesondere Portland-Zement gegebenenfalls in Kombination mit Aluminatzement für schnellabbindende Systeme. Ein weiterer Bestandteil sind 30 bis 85 Gew.-% Füllstoffe wie Quarzsand, carbonatische Füllstoffe wie Calciumcarbonat, Talkum, Leichtfüllstoffe, Hohlkugeln, puzzolanisch reagierende Füllstoffe wie Flugasche, Metakaolin, Mikrosilika, und Gummischnipsel. Dazu kommen noch 0.1 bis 2 Gew.-% Verdickungsmittel wie Celluloseether, Schichtsilikate, Polyacrylate. Der Anteil der hydrophoben Polymerzusammensetzung (trocken) beträgt bevorzugt 1 bis 10 Gew.-%. Gegebenenfalls können noch weitere Additive eingesetzt werden, beispielsweise zur Verbesserung von Standfestigkeit, Verarbeitbarkeit, offener Zeit oder Wasserfestigkeit. Die Angaben in Gew.-% beziehen sich dabei immer auf 100 Gew.-% Trockenmasse der Rezeptur.

Typische Rezepturen für zementäre Fugenfüller enthalten 15 bis 60 Gew.-% Zement insbesondere Portland-Zement gegebenenfalls in Kombination mit Aluminatzement für schnellabbindende Systeme. Ein weiterer Bestandteil sind 40 bis 85 Gew.-% Füllstoffe wie Quarzsand, carbonatische Füllstoffe wie Calciumcarbonat, Talkum, Leichtfüllstoffe, Hohlkugeln, puzzolanisch reagierende Füllstoffe wie Flugasche, Metakaolin, Mikrosilika, und Gummischnipsel. Dazu kommen noch 0,05 bis 1% Gew.-% Verdickungsmittel wie Celluloseether, Schichtsilikate, Polyacrylate. Der Anteil der hydrophoben Polymerzusammensetzung (trocken) beträgt bevorzugt 0,1 bis 6 Gew.-%. Gegebenenfalls können noch weitere Additive eingesetzt werden, beispielsweise zur Verbesserung von Standfestigkeit, Verarbeitbarkeit, offener Zeit oder Wasserfestigkeit. Die Angaben in Gew.-% beziehen sich dabei immer auf 100 Gew.-% Trockenmasse der Rezeptur.

Zementäre Fliesenkleber oder zementäre Fugenfüller werden erhalten, indem die hydrophoben Polymerzusammensetzungen, vorzugsweise in Form von Dispersionspulver, mit den weiteren Rezepturbestandteilen wie Zement, Füllstoff und gegebenenfalls weiteren Zuschlägen in geeigneten Mischern gemischt und homogenisiert werden. Alternativ können die hydrophoben Polymerzusammensetzungen auch in Form von wässrigen Polymerdispersionen oder wässrigen Redispersionen von Dispersionspulvern mit den weiteren Rezepturbestandteilen wie Zement, Füllstoff und gegebenenfalls weiteren Zuschlägen in geeigneten Mischern zu Fliesenklebermörteln oder Fugenfüllermörteln gemischt und homogenisiert werden. Die hydrophoben Polymerzusammensetzungen können gegebenenfalls auch in Form wässriger Redispersionen auf der Baustelle bei der Abmischung entsprechender Rezepturen zugegeben werden (2-Komponenten-System). Zur Herstellung pastöser Massen wird zunächst der Wasseranteil vorgelegt, anschließend werden die hydrophoben Polymerzusammensetzungen in Form von wässrigen Polymerdispersion zugegeben und die restlichen Bestandteile der Rezepturen zur Herstellung der entsprechenden Mörtel eingerührt. Vorzugsweise werden Trockenmischungen, d.h. zementäre Fliesenkleber bzw. zementäre Fugenfüller hergestellt, und das zur Verarbeitung erforderliche Wasser wird unmittelbar vor der Verarbeitung auf der Baustelle hinzugefügt.

Ein weiterer Gegenstand der Erfindung ist ein Verfahren zur Verlegung von Fliesen durch Verkleben und Verfugen mit zementären Mörteln enthaltend 15 bis 70 Gew.-% Zement, 30 bis 85 Gew.-% Füllstoff, 0,1 bis 15 Gew.-% einer hydrophoben Polymerzusammensetzung,
dadurch gekennzeichnet, dass die Fliesen auf horizontalen Flächen oder Flächen mit geringem Gefälle verlegt werden
und die hydrophobe Polymerzusammensetzung a) mindestens ein Organopolymer auf Basis von einem oder mehreren ethylenisch ungesättigten Monomeren aus der Gruppe umfassend Vinylester von unverzweigten oder verzweigten Alkylcarbonsäuren mit 1 bis 20 C-Atomen, Acrylsäureester oder Methacrylsäureester von verzweigten oder unverzweigten Alkoholen oder Diolen mit 1 bis 20 C-Atomen, Fumar- und/oder Maleinsäuremono- oder -diester von unverzweigten oder verzweigten Alkoholen mit 1 bis 12 C-Atomen, Olefine, Diene, Vinylaromaten und Vinylhalogenide und
ein oder mehrere b) Organosiliziumverbindungen und/oder c) Fettsäureverbindungen und/oder Fettsäurederivate enthält, wobei der Anteil der Organosiliziumverbindungen b) oder der Anteil der Fettsäuren oder Fettsäurederivate c) sowie der Anteil der gegebenenfalls enthaltenen Gemische aus b) und c) jeweils 0,1 bis 30 Gew.-% beträgt, wobei sich die Angaben in Gew.-% jeweils auf das Gesamtgewicht von Organopolymer a) beziehen,
wobei der ausgehärtete Fliesenklebermörtel und der ausgehärtete Fugenfüllermörtel Wasseraufnahmekoeffizienten w von jeweils ≤ 0,3 kg/m²h^{0,5} und diffusionsäquivalente Luftschichtdicken S_{d} von jeweils ≤ 0,5 m aufweisen und das Produkt aus w x S_{d} für den ausgehärteten Fliesenklebermörtel und den ausgehärteten Fugenfüllermörtel jeweils ≤ 0,1 kg/mh^{0,5} ist.

Die Verlegung der Fliesen kann nach den dem Fachmann bekannten Verfahren auf den unterschiedlichsten Untergründen erfolgen. Gebräuchlich ist das Dickbettverfahren, bei dem eine dicke Mörtelschicht (meist 15 bis 30 mm) auf die Fliesenrückseite aufgetragen und die Fliese mit ihrer Rückseite auf den Untergrund gedrückt wird. Heute weit verbreitet ist das Verkleben der Fliesen im sogenannten Dünnbettverfahren. Der Fliesenklebermörtel wird dabei auf den Untergrund aufgetragen und verteilt, so dass eine gleichmäßige Fliesenkleberschicht mit einer Dicke von meist 2 bis 4 mm entsteht, in die die Fliesen eingedrückt werden. Nach Aushärten der Mörtelschicht werden die Fugen zwischen den Fliesen mit dem Fugenfüllermörtel verfüllt. Im ebenfalls gebräuchlichen Floating-Buttering-Verfahren wird zusätzlich auf die Fliesenrückseite eine Mörtelschicht aufgezogen, bevor die Fliese mit der Rückseite in das Mörtelbett eingelegt wird.

Das erfindungsgemäße Verfahren eignet sich zur Verlegung von Fliesen aller Art, beispielsweise Steingut-, Steinzeug-, Feinststeinzeug-, Keramik- oder Naturfliesen im Außenbereich wie im Innenbereich.

Das erfindungsgemäße Verfahren eignet sich zur Verlegung von Fliesen auf allen gängigen Untergründen, insbesondere zur Verlegung von Fliesen auf Porenbeton, Beton, Putz, Bodenspachtelmassen.

Besonders geeignet ist das erfindungsgemäße Verfahren zur Verlegung von Fliesen in Umgebungen, die feuchten oder nassen Bedingungen oder Frost-Tau-Wechseln ausgesetzt sind.

Denn die erfindungsgemäß verlegten Fliesen zeichnen sich dadurch aus, dass sie zum einen auch unter sehr feuchten Bedingungen wenig Wasser aufnehmen. Darüber hinaus geben die erfindungsgemäß verlegten Fliesen die aufgenommene Feuchtigkeit wieder vollständig ab. Beispiele, bei denen das erfindungsgemäße Verfahren besonders vorteilhaft eingesetzt werden kann, sind Balkone, Terrassen oder Schwimmbäder.

Die folgenden Beispiele dienen der detaillierten Erläuterung der Erfindung und sind in keiner Weise als Einschränkung zu verstehen.

### Beispiele:

Aus den im folgenden aufgelisteten Bestandteilen der zementären Fliesenkleber bzw. zementären Fugenfüller wurden durch intensives Mischen zunächst die jeweiligen Trockenmischungen hergestellt. Durch anschließende Zugabe von ca. 26 Gew.-% Wasser, bezogen auf die Gesamtmasse der jeweiligen Trockenmischung, und intensivem Rühren wurden die gebrauchsfertigen Fliesenklebermörtel bzw. Fugenfüllermörtel erhalten.

### Herstellung der zementären Fliesenkleber (FK):

### FK 1: Nicht hydrophober zementärer Fliesenkleber:

| | |
|---|---|
| 350 g | Portlandzement CEM 1 52,5 R Milke |
| 58 g | Quarzsand 9a (0,1 bis 0,4 mm) |
| 568 g | Quarzsand Nr. 12 (0,06 bis 0,3 mm) |
| 40 g | Vinnapas RE 5028 N (nicht hydrophobes Dispersionspulver auf Basis von Vinylacetat und Ethylen) |
| 3,6 g | Walocel MKX 40 000 PF1 (Zelluloseether) |
| Wassermenge 260 ml | |

### FK 2: Hydrophober zementärer Fliesenkleber:

| | |
|---|---|
| 350 g | Portlandzement CEM 1 52,5 R Milke |
| 58 g | Quarzsand 9a (0,1 bis 0,4 mm) |
| 568 g | Quarzsand Nr. 12 (0,06 bis 0,3 mm) |
| 40 g | Vinnapas RI 554 Z (hydrophobes Dispersionspulver auf Basis von Vinylchlorid, Vinyllaurat und Ethylen mit i-Alkyltrialkoxysilan) |

| | |
|---|---|
| 3,6 g | Walocel MKX 25000 PF 25 L (Zelluloseether) |
| Wassermenge 260 ml | |

### Herstellung der zementären Fügenden (FF):

### FF 1: Nicht hydrophober zementärer Fugenfüller:

| | |
|---|---|
| 350 g | Dyckerhoff Weißzement CEM 1 52,5 |
| 634,3 g | Quarzsand 9a (0,1 bis 0,4 mm) |
| 0,7 g | Walocel MKX 15000 PP 20 (Zelluloseether) |
| 15 g | Vinnapas RE 5028 N (nicht hydrophobes Dispersionspulver auf Basis von Vinylacetat und Ethylen) |
| Wassermenge 230 ml | |

### FF 2: Hydrophober zementärer Fugenfüller:

| | |
|---|---|
| 350 g | Portlandzement CEM 1 42,5 |
| 634,3 g | Quarzsand 9a (0,1 bis 0,4 mm) |
| 0,7 g | Walocel MKX 15000 PP 20 (Zelluloseether) |
| 15 g | Vinnapas RI 554 Z (hydrophobes Dispersionspulver auf Basis von Vinylchlorid, Vinyllaurat und Ethylen mit Alkyltrialkoxysilan |
| Wassermenge 230 ml | |
| | |

Die oben angeführten Fliesenklebermörtel bzw. Fugenfüllermörtel zeigen nach Aushärtung folgende Eigenschaften:

| zementärer Fliesenkleber | S_{d} [m] | µ | w[ kg/m²h^{0.5}] | S_{d} x w [kg/mh^{0.5}] |
|---|---|---|---|---|
| FK 1 | 0,15 | 37,5 | 2,5 | 0,375 |
| FK 2 | 0,12 | 30 | 0,12 | 0.0144 |

| zementärer Fugenfüller | | | | |
|---|---|---|---|---|
| FF 1 | 0,08 | 20 | 3,0 | 0,24 |
| FF 2 | 0,07 | 17,5 | 0,07 | 0,0049 |
| S_{d}: diffusionsäquivalente Lüftschichtdicke | | | | |
| µ: Wasserdampfdiffusionswiderstandszahl gemäß DIN EN ISO 12572 | | | | |
| w: Wasseraufnahmekoeffizient | | | | |

### Verlegung von Fliesen

Die Fliesenverlegung erfolgte, indem wasserdichte Feinsteinzeugfliesen (entsprechend EN176 mit einer Wasseraufnahme bis 0,5 %, Größe: 10 cm x 10 cm, Hersteller Winckelmans) mit dem jewells angegebenen Fliesenklebermörtel (Auftrag 6X6X6 Zahnspachtel, Schichtdicke: ca. 4 mm) bzw. Fugenfüllermörtel (Fugenbreite: 6 mm) nach dem Floating-Buttering-Verfahren auf Betonplatten entsprechend EN1323 (Maße 40 cm X 40 cm) verlegt wurden. Rückseite und Seitenflächen wurden mit PU-Lack abgedichtet. Anschließend wurde der so erhaltene Fliesenverbund bei 23°C und 100 % Luftfeuchtigkeit (Plastiktüte) für 7 Tage ausgehärtet.

### Beispiel:

Prüfkörper mit FK2 und FF2.

### Vergleichsbeispiel:

Prüfkörper mit FK1 und FF1.

### Anwendungstechnische Ausprüfung

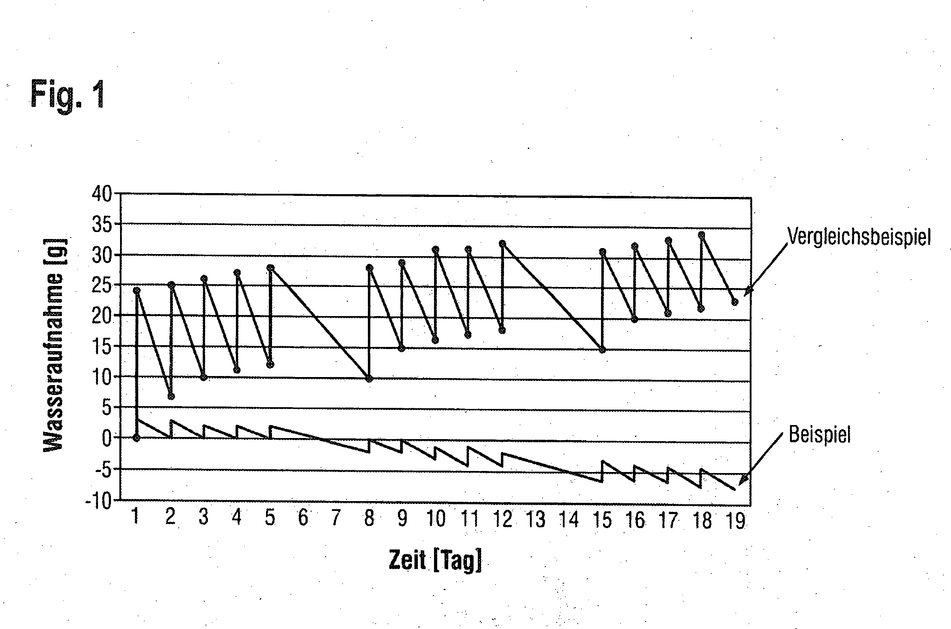

Die anwendungstechnische Ausprüfung des Beispiels und des Vergleichsbeispiels folgte nach folgendem Schema:
Ein Prüfungstag bestand aus 1 h Wasserlagerung (Staudruck: 1 cm Wassersäule) und anschließend 23 h Lagerung unter Normalbedingungen nach DIN 50014. Eine Prüfungswoche bestand aus 4 Prüfungstagen, anschließend 1 h Stunde Wasserlagerung und abschließend 71 h Lagerung unter Normalbedingungen nach DIN 50014. Insgesamt dauerte eine Ausprüfung 2 Prüfungswochen und 4 Prüfungstage (siehe Figur 1). Nach jeder Wasserlagerung, jedem Prüfungstag bzw. jeder Prüfungswoche wurde das Gewicht des Prüfkörpers bestimmt und aus der jeweiligen Änderung der Auswage die Wasseraufnahme bzw. Wasserabgabe bestimmt (Ergebnis: siehe Figur 1).

Aus Figur 1 geht hervor, dass der Wassergehalt des erfindungsgemäßen Prüfkörpers im Laufe der Ausprüfung nach jedem Prüfungstag im Bereich der Messgenauigkeit kontinuierlich abgenommen hat; d.h. der Prüfkörper gab während der Lagerung unter Normalbedingung das zuvor im Zuge einer Wasserlagerung aufgenommene Wasser und weitere im Prüfkörper noch enthaltene Restfeuchtigkeit ab.

Dagegen war bei dem nicht erfindungsgemäßen Prüfkörper im Laufe der Ausprüfung zu Beginn eines jeden Tages im Bereich der Messgenauigkeit eine stete Zunahme des Wassergehalts zu konstatieren. Der nicht erfindungsgemäße Prüfkörper hat also das Wasser so stark gebunden, dass es im Zuge der Trocknung nicht mehr vollständig abgegeben wurde.

Am Ende der Ausprüfung hatte der nicht erfindungsgemäße Prüfkörper 28 g Wasser aufgenommen, und der erfindungsgemäße Prüfkörper hatte dagegen 7 g Wasser abgegeben.

Dies belegt, dass die erfindungsgemäß verlegten Fliesen auch unter extrem feuchten Bedingungen kein Wasser dauerhaft aufnehmen und damit ein entsprechender Fliesenverbund auch entsprechend witterungsstabil ist.

## Patentansprüche

1. Fliesenverbund erhältlich mittels Verklebung und Verfugung von Fliesen mit zementären Mörteln enthaltend 15 bis 70 Gew.-% Zement, 30 bis 85 Gew.-% Füllstoff und 0,1 bis 15 Gew.-% einer hydrophoben Polymerzusammensetzung, jeweils bezogen auf das Gesamtgewicht der Rezeptur zur Verklebung oder Verfugung, **dadurch gekennzeichnet, dass** die Fliesen auf horizontalen Flächen oder Flächen mit geringem Gefälle verlegt sind und
die hydrophobe Polymerzusammensetzung a) mindestens ein Organopolymer auf Basis von einem oder mehreren ethylenisch ungesättigten Monomeren aus der.Gruppe umfassend Vinylester von unverzweigten oder verzweigten Alkylcarbonsäuren mit 1 bis 20 C-Atomen, Acrylsäureester oder Methäcrylsäureester von verzweigten oder unverzweigten Alkoholen oder Diolen mit 1 bis 20 C-Atomen, Fumar- und/oder Maleinsäuremono- oder -diester von unverzweigten oder verzweigten Alkoholen mit 1 bis 12 C-Atomen, Olefine, Diene, Vinylaromaten und Vinylhalogenide und
ein oder mehrere b) Organosiliziumverbindungen und/oder c) Fettsäureverbindungen und/oder Fettsäurederivate enthält, wobei der Anteil der Organosiliziumverbindungen b) oder der Anteil der Fettsäuren oder Fettsäurederivate c) sowie der Anteil der gegebenenfalls enthaltenen Gemische aus b) und c) jeweils 0,1 bis 30 Gew.-% beträgt, wobei sich die Angaben in Gew.-% jeweils auf das Gesamtgewicht von Organopolymer a) beziehen,
wobei der ausgehärtete Fliesenklebermörtel und der ausgehärtete Fugenfüllermörtel Wasseraufnahmekoeffizienten w von jeweils ≤ 0,3 kg/m²h^{0,5} und diffusionsäquivalente Luftschichtdicken S_{d} von jeweils ≤ 0,5 m aufweisen und das Produkt aus w x S_{d} für den ausgehärteten Fliesenklebermörtel und den ausgehärteten Fugenfüllermörtel jeweils ≤ 0,1 kg/mh^{0,5} ist.

2. Fliesenverbund nach Anspruch 1, **dadurch gekennzeichnet, dass** die hydrophobe Polymerzusammensetzung
b) ein oder mehrere Organosiliziumverbindungen enthält, aus der Gruppe Kieselsäureester Si(OR')₄, Silane wie Tetraorganosilane SiR₄ und Organoorganoxysilane SiRₙ(OR')₄₋ₙ mit n = 1 bis 3, Polysilane mit der allgemeinen Formel R₃Si(SiR₂)ₙSiR₃ mit n = 0 bis 500, Organosilanole SiRₙ(OH)₄₋ₙ, Disiloxane, Oligosiloxane, Polysiloxane aus Einheiten der allgemeinen Formel R_{c}H_{d}Si(OR')ₑ(OH)_{f}O_{(4-c-d-e-f)/2} mit c = 0 bis 3, d = 0 bis 1, e = 0 bis 3, f = 0 bis 3 und wobei die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, Carbosilane, Polycarbosilane, Carbosiloxane, Polycarbosiloxane, Polysilylendisiloxane, Cyclosiloxane.

3. Fliesenverbund nach Anspruch 1 bis 2, **dadurch gekennzeichnet, dass** die hydrophobe Polymerzusammensetzung Fettsäuren oder Fettsäurederivate c) enthält, aus der Gruppe der gesättigten und ungesättigten Fettsäuren mit 8 bis 22 C-Atomen, deren Metallseifen, deren Amide sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden und mit Polyhydroxyverbindungen.

4. Verfahren zur Herstellung von Fliesenverbunden gemäß Anspruch 1 bis 3 mittels Verlegung von Fliesen durch Verkleben und Verfugen mit zementären Mörteln enthaltend 15 bis 70 Gew.-% Zement, 30 bis 85 Gew.-% Füllstoff, 0,1 bis 15 Gew.-% einer hydrophoben Polymerzusammensetzung, **dadurch gekennzeichnet, dass**
die Fliesen auf horizontalen Flächen oder Flächen mit geringem Gefälle verlegt werden und
die hydrophobe Polymerzusammensetzung a) mindestens ein Organopolymer auf Basis von einem oder mehreren ethylenisch ungesättigten Monomeren aus der Gruppe umfassend Vinylester von unverzweigten oder verzweigten Alkylcarbonsäuren mit 1 bis 20 C-Atomen, Acrylsäureester oder Methacrylsäureester von verzweigten oder unverzweigten Alkoholen oder Diolen mit 1 bis 20 C-Atomen, Fumar- und/oder Maleinsäuremono- oder -diester von unverzweigten oder verzweigten Alkoholen mit 1 bis 12 C-Atomen, Olefine, Diene, Vinylaromaten und Vinylhalogenide und
ein oder mehrere b) Organosiliziumverbindungen und/oder c) Fettsäureverbindungen und/oder Fettsäurederivate enthält, wobei der Anteil der Organosiliziumverbindungen b) oder der Anteil der Fettsäuren oder Fettsäurederivate c) sowie der Anteil der gegebenenfalls enthaltenen Gemische aus b) und c) jeweils 0,1 bis 30 Gew.-% beträgt, wobei sich die. Angaben in Gew.-% jeweils auf das Gesamtgewicht von Organopolymer a) beziehen,
wobei der ausgehärtete Fliesenklebermörtel und der ausgehärtete Fugenfüllermörtel Wasseraufnahmekoeffizienten w von jeweils ≤ 0,3 kg/m²h^{0,5} und diffusionsäquivalente Luftschichtdicken S_{d} von jeweils ≤ 0,5 m aufweisen und das Produkt aus w x S_{d} für den ausgehärteten Fliesenklebermörtel und den ausgehärteten Fugenfüllermörtel jeweils ≤ 0,1 kg/mh^{0,5} ist.

## Claims

1. Tile combination obtainable by means of adhesive bonding and grouting of tiles with cement-based mortars containing from 15 to 70% by weight of cement, from 30 to 85% by weight of filler and from 0.1 to 15% by weight of a hydrophobic polymer composition, based in each case on the total weight of the formulation for adhesive bonding or grouting, **characterized in that** the tiles have been laid on horizontal surfaces or surfaces having a low gradient and
the hydrophobic polymer composition a) contains at least one organopolymer based on one or more ethylenically unsaturated monomers from the group consisting of vinyl esters of straight-chain or branched alkyl carboxylic acids having 1 to 20 C atoms, acrylates or methacrylates of branched or straight-chain alcohols or diols having 1 to 20 C atoms, fumaric and/or maleic mono- or diesters of straight-chain or branched alcohols having 1 to 12 C atoms, olefins, dienes, vinylaromatics and vinyl halides, and
one or more b) organosilicon compounds and/or c) fatty acid compounds and/or fatty acid derivatives,
wherein the proportion of the organosilicon compounds b) or the proportion of the fatty acids or fatty acid derivatives c) and the proportion of the optionally present mixtures of b) and c) is in each case from 0.1 to 30% by weight, the data in % by weight being based in each case on the total weight of organopolymer a),
wherein the hardened tile adhesive mortar and the hardened grouting mortar have water absorption coefficients w of in each case ≤ 0.3 kg/m²h^{0.5} and diffusion-equivalent air layer thickness S_{d} of in each case ≤ 0.5 m and the product w x S_{d} for the hardened tile adhesive mortar and the hardened grouting mortar is in each case ≤ 0.1 kg/mh^{0.5}.

2. Tile combination according to Claim 1, **characterized in that** the hydrophobic polymer composition contains
b) one or more organosilicon compounds from the group consisting of silicic acid esters Si(OR')₄, silanes, such as tetraorganosilanes SiR₄ and organoorganooxysilanes SiRₙ(OR')₄₋ₙ where n = 1 to 3, polysilanes having the general formula R₃Si(SiR₂)ₙSiR₃ where n = 0 to 500, organosilanols SiRₙ(OH)₄₋ₙ, disiloxanes, oligosiloxanes, polysiloxanes comprising units of the general formula R_{c}H_{d}Si(OR')ₑ(OH)_{f}O_{(4-c-d-e-f)/2} where c = 0 to 3, d = 0 to 1, e = 0 to 3, f = 0 to 3, the sum c+d+e+f being not more than 3.5 per unit, in each case R being identical or different and being branched or straight-chain alkyl radicals having 1 to 22 C atoms, cycloalkyl radicals having 3 to 10 C atoms, alkylene radicals having 2 to 4 C atoms and aryl, aralkyl or alkylaryl radicals having 6 to 18 C atoms, and R' being identical or different alkyl radicals and alkoxy alkylene radicals having in each case 1 to 4 C atoms, carbosilanes, polycarbosilanes, carbosiloxanes, polycarbosiloxanes, polysilylenedisiloxanes, cyclosiloxanes.

3. Tile combination according to Claims 1 to 2, **characterized in that** the hydrophobic polymer composition contains fatty acids or fatty acid derivatives c) from the group consisting of the saturated and unsaturated fatty acids having 8 to 22 C atoms, the metal soaps thereof, the amides thereof and the esters thereof with monohydric alcohols having 1 to 14 C atoms, with glycol, with polyglycol, with polyalkylene glycol, with glycerol, with mono-, di- or triethanolamine, with monosaccharides and with polyhydroxy compounds.

4. Method for the production of tile combinations according to Claims 1 to 3 by means of laying tiles by adhesive bonding and grouting with cement-based mortars containing from 15 to 70% by weight of cement, from 30 to 85% by weight of filler, from 0.1 to 15% by weight of a hydrophobic polymer composition, **characterized in that**
the tiles have been laid on horizontal surfaces or surfaces having a low gradient and
the hydrophobic polymer composition a) contains at least one organopolymer based on one or more ethylenically unsaturated monomers from the group consisting of vinyl esters of straight-chain or branched alkyl carboxylic acids having 1 to 20 C atoms, acrylates or methacrylates of branched or straight-chain alcohols or diols having 1 to 20 C atoms, fumaric and/or maleic mono- or diesters of straight-chain or branched alcohols having 1 to 12 C atoms, olefins, dienes, vinylaromatics and vinyl halides, and
one or more b) organosilicon compounds and/or c) fatty acid compounds and/or fatty acid derivatives,
wherein the proportion of the organosilicon compounds b) or the proportion of the fatty acids or fatty acid derivatives c) and the proportion of the optionally present mixtures of b) and c) is in each case from 0.1 to 30% by weight, the data in % by weight being based in each case on the total weight of organopolymer a), wherein the hardened tile adhesive mortar and the hardened grouting mortar have water absorption coefficients w of in each case ≤ 0.3 kg/m²h^{0.5} and diffusion-equivalent air layer thickness S_{d} of in each case ≤ 0.5 m and the product w x S_{d} for the hardened tile adhesive mortar and the hardened grouting mortar is in each case ≤ 0.1 kg/mh^{0.5}.

## Revendications

1. Assemblage de carreaux pouvant être obtenu par collage et scellement de carreaux avec des mortiers cimentaires contenant 15 à 70 % en poids de ciment, 30 à 85 % en poids de charge et 0,1 à 15 % en poids d'une composition polymère hydrophobe, à chaque fois par rapport au poids total de la formulation pour le collage ou le scellement, **caractérisé en ce que**
les carreaux sont disposés sur des surfaces horizontales ou des surfaces ayant une légère pente et la composition polymère hydrophobe contient a) au moins un organopolymère à base d'un ou de plusieurs monomères éthyléniquement insaturés du groupe comprenant les esters de vinyle d'acides alkylcarboxyliques non ramifiés ou ramifiés de 1 à 20 atomes C, les esters de l'acide acrylique ou les esters de l'acide méthacrylique d'alcools ou de diols ramifiés ou non ramifiés de 1 à 20 atomes C, les mono- ou diesters de l'acide fumarique et/ou maléique d'alcools non ramifiés ou ramifiés de 1 à 12 atomes C, les oléfines, les diènes, les composés aromatiques de vinyle et les halogénures de vinyle, et
un ou plusieurs b) composés d'organosilicium et/ou c) composés d'acides gras et/ou dérivés d'acides gras, la proportion des composés d'organosilicium b) ou la proportion des acides gras ou dérivés d'acides gras c), ainsi que la proportion des mélanges de b) et c) éventuellement contenus étant à chaque fois de 0,1 à 30 % en poids, les données de % en poids se rapportant à chaque fois au poids total d'organopolymère a), le mortier adhésif à carreaux durci et le mortier de remplissage pour joints durci présentant des coefficients d'absorption d'eau w chacun ≤ 0,3 kg/m²h^{0,5} et des épaisseurs de couche d'air équivalente à la diffusion S_{d} chacune ≤ 0,5 m, et le produit w x S_{d} pour le motier adhésif à carreaux durci et le mortier de remplissage pour joints durci étant à chaque fois ≤ 0,1 kg/mh^{0,5}.

2. Assemblage de carreaux selon la revendication 1, **caractérisé en ce que** la composition polymère hydrophobe contient b) un ou plusieurs composés d'organosilicium du groupe des esters de l'acide silicique Si(OR')₄, des silanes tels que les tétraorganosilanes SiR₄ et les organoorganoxysilanes SiRₙ(OR')₄₋ₙ avec n = 1 à 3, des polysilanes de formule générale R₃Si(SiR₂)SiR₃ avec n = 0 à 500, des organosilanols SiRₙ(OH)₄₋ₙ, des disiloxanes, des oligosiloxanes, des polysiloxanes à base d'unités de formule générale R_{c}H_{d}Si(OR')ₑ(OH)_{f}O_{(4-c-d-e-f)/2} avec c = 0 à 3, d = 0 à 1, e = 0 à 3, f = 0 à 3 et la somme c+d+e+f par unité étant au plus 3,5, R étant à chaque fois identique ou différent et signifiant des radicaux alkyle ramifiés ou non ramifiés de 1 à 22 atomes C, des radicaux cycloalkyle de 3 à 10 atomes C, des radicaux alkylène de 2 à 4 atomes C, ainsi que des radicaux aryle, aralkyle, alkylaryle de 6 à 18 atomes C, et R' signifiant des radicaux alkyle et des radicaux alcoxyalkylène identiques ou différents contenant à chaque fois 1 à 4 atomes C, des carbosilanes, des polycarbosilanes, des carbosiloxanes, des polycarbosiloxanes, des polysilylènedisiloxanes, des cyclosiloxanes.

3. Assemblage de carreaux selon les revendications 1 à 2, **caractérisé en ce que** la composition polymère hydrophobe contient des acides gras ou des dérivés d'acides gras c) du groupe des acides gras saturés et insaturés de 8 à 22 atomes C, leurs savons métalliques, leurs amides et leurs esters avec des alcools monovalents de 1 à 14 atomes C, avec un glycol, avec un polyglycol, avec un polyalkylène glycol, avec de la glycérine, avec une mono-, di- ou triéthanolamine, avec des monosaccharides et avec des composés polyhydroxy.

4. Procédé de fabrication d'assemblages de carreaux selon les revendications 1 à 3 par disposition de carreaux par collage et scellement avec des mortiers cimentaires contenant 15 à 70 % en poids de ciment, 30 à 85 % en poids de charge et 0,1 à 15 % en poids d'une composition polymère hydrophobe, **caractérisé en ce que**
les carreaux sont disposés sur des surfaces horizontales ou des surfaces ayant une légère pente et
la composition polymère hydrophobe contient a) au moins un organopolymère à base d'un ou de plusieurs monomères éthyléniquement insaturés du groupe comprenant les esters de vinyle d'acides alkylcarboxyliques non ramifiés ou ramifiés de 1 à 20 atomes C, les esters de l'acide acrylique ou les esters de l'acide méthacrylique d'alcools ou de diols ramifiés ou non ramifiés de 1 à 20 atomes C, les mono- ou diesters de l'acide fumarique et/ou maléique d'alcools non ramifiés ou ramifiés de 1 à 12 atomes C, les oléfines, les diènes, les composés aromatiques de vinyle et les halogénures de vinyle, et
un ou plusieurs b) composés d'organosilicium et/ou c) composés d'acides gras et/ou dérivés d'acides gras, la proportion des composés d'organosilicium b) ou la proportion des acides gras ou dérivés d'acides gras c), ainsi que la proportion des mélanges de b) et c) éventuellement contenus étant à chaque fois de 0,1 à 30 % en poids, les données de % en poids se rapportant à chaque fois au poids total d'organopolymère a), le mortier adhésif à carreaux durci et le mortier de remplissage pour joints durci présentant des coefficients d'absorption d'eau w chacun ≤ 0,3 kg/m²h^{0,5} et des épaisseurs de couche d'air équivalente à la diffusion S_{d} chacune ≤ 0,5 m, et le produit w x S_{d} pour le motier adhésif à carreaux durci et le mortier de remplissage pour joints durci étant à chaque fois ≤ 0,1 kg/mh^{0,5}.
